# EUROPÄISCHE PATENTSCHRIFT

(11) **EP 0 752 546 B1**
(45) Veröffentlichungstag und Bekanntmachung des Hinweises auf die Patenterteilung: **07.06.2000**
(21) Anmeldenummer: 96110207.6
(22) Anmeldetag: 25.06.1996
(51) Int. Cl.: F16H 59/02, F16H 63/14

(54) **Schaltvorrichtung für ein halbautomatisch schaltbares Wechselgetriebe eines Kraftfahrzeuges**
Selector mechanism for a semiautomatic shifted gearbox of a motor vehicle
Mécanisme sélecteur de rapport pour boîte de vitesses semi-automatique de véhicule automobile

(30) Priorität: 03.07.1995 DE 19524116
(43) Veröffentlichungstag der Anmeldung: 08.01.1997
(73) Patentinhaber: Ford Global Technologies, Inc., Dearborn, Michigan 48126-2490 (US)
(72) Erfinder: Petri, Hans, 53804 Much (DE)
(74) Vertreter: Messulam, Alec Moses

(56) Entgegenhaltungen:
- DE-A- 3 331 223
- US-A- 5 150 629

## Beschreibung

Die Erfindung bezieht sich auf eine Schaltvorrichtung für ein halbautomatisch schaltbares Wechselgetriebes eines Kraftfahrzeuges, mit einer vom Fahrer zu betätigenden Kupplung und einem in einer Schaltgasse bewegbaren Schalthebel, mittels dem über eine elektromechanisch betätigbare Vorwähleinrichtung verschiedene, auf Synchroneinrichtungen im Wechselgetriebe einwirkende, Schaltgabeln betätigbar sind, wobei der Schalthebel als ein jeweils in seine Ausgangslage zurückkehrender Kipp-Schalthebel ausgebildet ist.

Aus der DE-PS 33 31 223 ist eine Schaltvorrichtung dieser Art bekannt, wobei die elektromechanisch betätigbare Vorwähleinrichtung aus verschiedenen vom Fahrer zu betätigenden Druckknöpfen besteht über die dann eine von drei möglichen Schaltgassen ausgewählt wird, in denen dann der Fahrer durch betätigen des Schalthebels die zur Verfügung stehenden zwei unterschiedlichen Gangstufen einlegen kann.

Die bekannte Schaltvorrichtung weist somit den Nachteil auf, daß der Fahrer neben der Betätigung des Schalthebels nach vorn oder nach hinten aus seiner Mittellage heraus, er auch jeweils einen der drei Druckknöpfe betätigen muß, um die für den Betrieb des Kraftfahrzeuges geeignete nächste Gangstufe schalten zu können.

Im Endeffekt bietet die bekannte Schaltvorrichtung lediglich ein halbautomatisch schaltbares Wechselgetriebe für ein Kraftfahrzeug, das in zwei bzw. drei Schaltbereichen jeweils nur zwischen einem höheren und einem niederen Gang weitergeschaltet werden kann.

Die Aufgabe der Erfindung ist es, eine Schaltvorrichtung für ein halbautomatisch schaltbares Wechselgetriebes eines Kraftfahrzeuges der im Oberbegriff des Anspruches 1 erläuterten Art derart zu verbessern, daß der Fahrer lediglich durch das Betätigen der Kupplung und des in einer Schaltgasse bewegbaren Schalthebels nach vorne oder nach hinten sämtliche im Wechselgetriebe vorhandenen Gangstufen durchschalten kann, wobei eine elektromechanische Vorwähleinrichtung sicherstellt, daß nur jeweils die für den vorherrschenden Betriebszustand des Kraftfahrzeuges geeignete Gangstufe eingerückt werden kann.

Gemäß der Erfindung wird diese Aufgabe gelöst, indem eine Schaltvorrichtung für ein halbautomatisch schaltbares Wechselgetriebe eines Kraftfahrzeuges, der im Oberbegriff des Anspruches 1 erläuterten Art, die im Kennzeichenteil des Anspruches 1 aufgezeigten Merkmale aufweist.

Dadurch, daß der Schalthebel als ein jeweils in seine Ausgangslage zurückkehrender Kipp-Schalthebel ausgebildet ist, die Schaltbewegung des Schalthebels über ein Schaltgestänge oder über ein Schaltkabel auf einen in Querrichtung zu einer Schaltwelle des Wechselgetriebes linear geführten Schaltschlitten übertragbar sind, der auf Schiebeführungen geführte Schaltschlitten über jeweils eine obere und eine untere Langloch/Bolzen-Verbindung mit jeweils einem von zwei Übertragungshebeln zusammenwirkt und auf der Schaltwelle des Wechselgetriebes eine feste Schaltnabe mit darauf axial verschiebbarer Schaltmuffe angeordnet ist, die über die elektromechanisch betätigbare Vorwähleinrichtung verschiebbar ist, um in treibende Verbindung mit jeweils einer von an den Übertragungshebeln angeordneten Kupplungsverzahnungen zu gelangen, wodurch eine Kipp-Schaltbewegung des Schalthebels in eine von zwei möglichen Drehbewegungen der Schaltwelle umgesetzt wird, kann der Fahrer des Fahrzeuges nur durch Betätigen des Schalthebels durch sämtliche Gangstufen des Wechselgetriebes durchschalten.

Die elektromechanisch betätigbare Vorwähleinrichtung besteht im wesentlichen aus einem Mikroprozessor, der mit Betriebsparametern der Brennkraftmaschine und des Wechselgetriebes über entsprechende Sensoren mit geeigneten Signalen versorgt wird und in Abhängigkeit von der daraus ermittelten, für den Betriebsbereich des Kraftfahrzeuges günstigsten Gangstufe die axial verschiebbare Schaltmuffe an der Schaltwelle elektromechanisch derart verschiebt, daß durch die vom Fahrer ausgelöste Kipp-Schaltbewegung am Schalthebel das Einrücken der geeigneten Gangstufe bewirkt wird.

Die elektromechanisch betätigbare Vorwähleinrichtung ist vorzugsweise ein Bestandteil eines rechnergesteuerten Gesamtsystems, das z.B. bereits für die Steuerung der Brennkraftmaschine erforderlich ist und bereits mit einer Vielzahl von erforderlichen Parametern über entsprechende Sensoren versorgt wird und dem nur noch entsprechende Sensoren, z.B. für die eingelegte Gangstufe und dergleichen, hinzugefügt werden.

Die vorliegende Erfindung wird in Zusammenhang mit einem in den Zeichnungen gezeigten Ausführungsbeispiel näher erläutert. Es zeigt:
- Fig. 1: einen vertikalen Schnitt durch den Bereich der erfindungsgemäßen Schaltvorrichtung;
- Fig. 2: einen vertikalen Schnitt resp. Ansicht entlang der Linie II-II in Fig. 1;
- Fig. 3: eine Darstellung der Schaltbewegungen des Schalthebels in einer Schaltgasse in Draufsicht in Gegenüberstellung der Bewegungsfunktionen für die Schaltung in Seitenansicht;
- Fig. 4: eine Tabelle über die Betätigungslogik der Schaltvorrichtung während einer Hochschaltung und einer Abwärtsschaltung durch die verschiedenen Gangstufen und
- Fig. 5, 6 und 7: Bewegungsabläufe am Schaltschlitten während einiger besonderer Schaltfunktionen der erfindungsgemäßen Schaltvorrichtung.

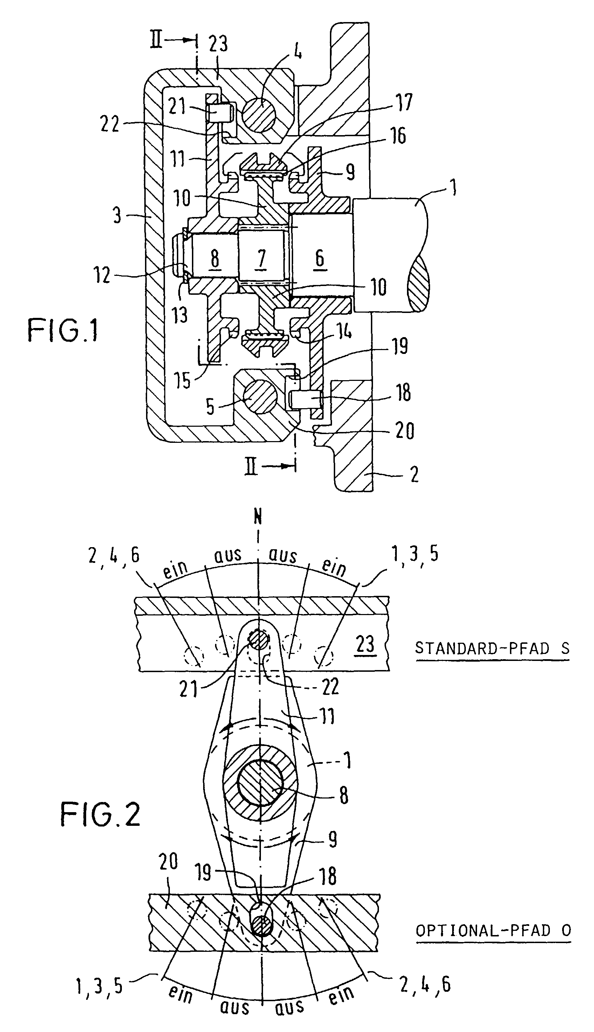

In Fig. 1 ist in einem nicht gezeigten Getriebegehäuse eine Schaltwelle 1 angeordnet, die sich axial über das Ende des Getriebegehäuses hinaus erstreckt.

Das freie Ende der Schaltwelle 1 erstreckt sich in ein an das Getriebegehäuse angesetzte Schaltvorrichtungsgehäuse 2 in dem ein Schaltschlitten 3 über obere und untere Führungsbolzen 4 und 5 linear und in Querrichtung zur Schaltwelle 1 verschiebbar angeordnet ist.

Das freie Ende der Schaltwelle 1 ist mit drei Stufenabsätzen 6, 7 und 8 versehen, wobei auf dem ersten Absatz 6 ein erster Übertragungshebel 9 drehbar aufgenommen ist, auf den mit einer Kerbverzahnung versehenen zweiten Absatz 7 wird eine Schaltnabe 10 drehfest aufgenommen und auf dem dritten Absatz 8 wird ein zweiter Übertragungshebel 11 drehbar aufgenommen. Die geschilderte Anordnung wird durch einen in eine Nut 12 am Ende der Schaltwelle 11 eingesetzten Sicherungsring 13 in axialer Richtung zusammengehalten. Jeder der beiden Übertragungshebel 9 und 11 ist an seiner zu der Schaltnabe 10 gerichteten Seite mit einer Kupplungsverzahnung 14 bzw. 15 versehen, die mit der Innenverzahnung 16 einer auf der Schaltnabe 10 angeordneten Schaltmuffe 17 in Eingriff bringbar sind, sofern die Schaltmuffe 17 durch eine elektromechanisch betätigbare Vorwähleinrichtung (nicht gezeigt) in eine linke oder eine rechte Lage in Fig. 1 verschoben wird.

Am ersten Übertragungshebel 9 ist an dessen unteren Ende ein Bolzen 18 angeordnet, der mit einem Langloch 19 in einem Vorsprung 20 des Schaltschlittens 3 zusammenwirkt. In ähnlicher Weise ist der zweite Übertragungshebel 11 an seinem oberen Ende mit einem Bolzen 21 versehen, der mit einem Langloch 22 in einem Vorsprung 23 des Schaltschlittens 3 zusammenwirkt.

Die Funktion der erfindungsgemäßen Schaltvorrichtung wird nunmehr in Zusammenhang mit der Fig. 2 näher erläutert.

In Fig. 2 sind hierbei nur diejenigen Teile des Schaltschlittens 3 und die Teile der ersten und zweiten Übertragungshebel 9 und 11 aufgezeigt, die zur Beschreibung der Funktionsweise wesentlich sind. Am ersten Übertragungshebel 9 ist ein Bolzen 18 angeordnet, der in einem Langloch 19 am Vorsprung 20 des Schaltschlittens 3 angreift. Am zweiten Übertragungshebel 11 ist ein Bolzen 21 angeordnet, der mit einem Langloch 22 zusammenwirkt, das im Vorsprung 23 des Schaltschlittens 3 angeordnet ist.

Mit einer gestrichelten vertikalen Linie ist die Startposition der beiden Übertragungshebel 9 bzw. 11 eingezeichnet. Entsprechende bogenförmige Pfeile nach links und rechts zeigen die Bewegungsmöglichkeit der beiden Übertragungshebel 9 und 11 auf.

Benachbart den beiden Bolzen 18 und 21 sind entlang ihres Schwenkradius Kreise eingezeichnet, die die möglichen Lagen der Bolzen 18 und 19 in Zusammenhang mit der dadurch betätigten Schaltwelle 1 und der hierdurch aus- bzw. eingerückten Gangstufen aufzeigen. Im oberen Teil der Fig. 2 ist hierbei der mögliche Bewegungsablauf für die Langloch/Bolzen-Verbindung 22/21 als Standard-Pfad S aufgezeigt, bei der während einer Bewegung aus der Startposition zunächst ein Aus- und unmittelbar darauffolgend ein Einlegen einer Gangstufen erfolgt. Die hierbei schaltbaren Gangstufen sind durch die fetten arabischen Ziffern 1, 3, 5 und 2, 4, 6 angegeben.

In ähnlicher Weise ist im unteren Teil der Fig. 2 der Bewegungsablauf der Langloch/Bolzen-Verbindung 19/18 als Optional-Pfad O aufgezeigt.

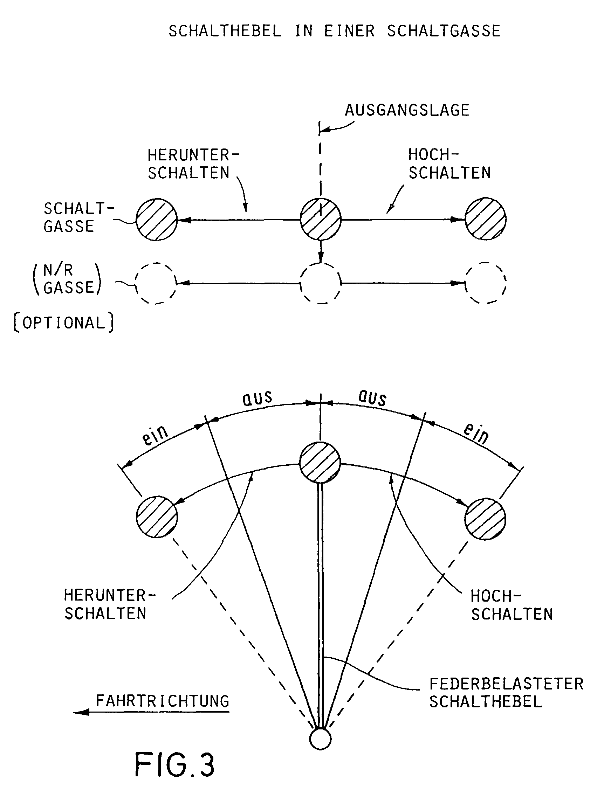

In Fig. 3 ist die Schaltbewegung des Schalthebels in einer Schaltgasse in Draufsicht gezeigt, wobei die Bewegungsfunktionen für die eigentliche Schaltung der Gangstufen in Seitenansicht des Schalthebels gegenübergestellt sind.

Durch einen Pfeil ist die normale Fahrtrichtung des Kraftfahrzeuges angegeben und der in einer Schaltgasse, und ggf. auch in einer zweiten, N/R-Gasse bewegbare, federbelastete Schalthebel kehrt jeweils in seine Ausgangslage zurück. Wie aus dem unteren Teil der Fig. 3 ersichtlich, entspricht einer Schalthebelbewegung zum Hoch- oder Herunterschalten jeweils ein Aus- und Einrückvorgang einer Schaltstufe.

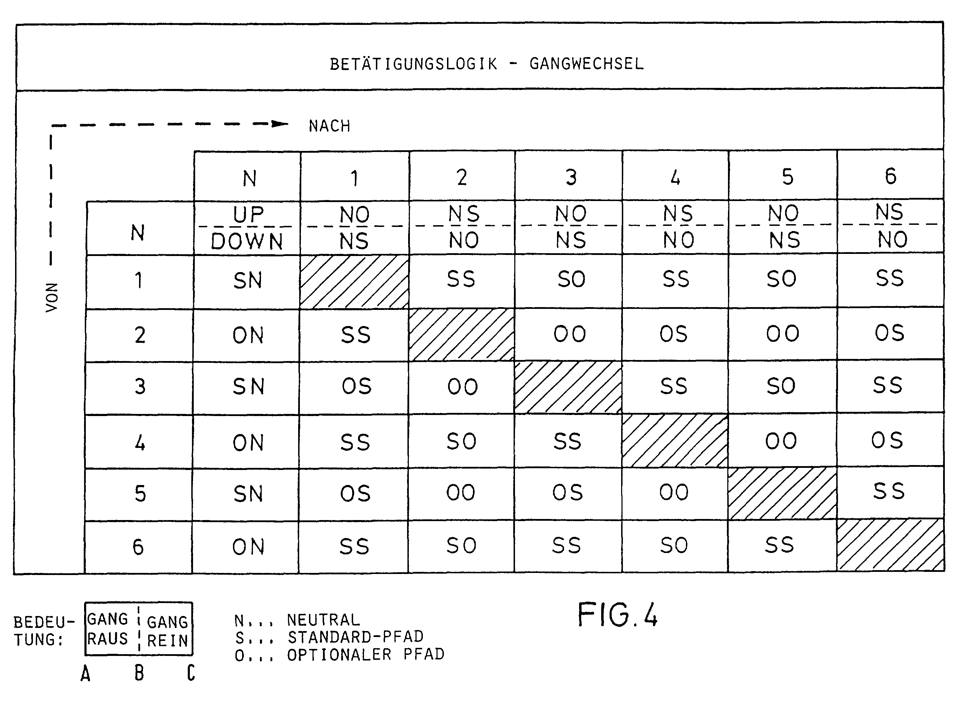

In der Tabelle der Fig. 4 ist die Betätigungslogik für die Kupplungsbewegung der Schaltmuffe 17 mit Bezug auf die Kupplungsverzahnungen 14 und 15 der Übertragungshebel 9 und 11 aufgezeigt, indem für jeden Schaltvorgang von einer Schaltstufe zu einer anderen Schaltstufe die Bewegungsabläufe über den Standard- oder den Optional-Pfad angegeben werden.

Die Funktionsweise der erfindungsgemäßen Schaltvorrichtung wird nachfolgend erläutert:

Wie bereits eingangs ausgeführt, wird vom Fahrer des Kraftfahrzeuges lediglich verlangt, daß er bei dem Wunsch einer Änderung der Gangstufe die Kupplung betätigt und den Kipp-Schalthebel nach vorne oder nach hinten bewegt, wobei festgelegt ist, daß bei einem Heranziehen des Kipp-Schalthebels zu sich eine Hochschaltung und beim Wegschieben des Schalthebels eine Herunterschaltung gewünscht wird. Der Kipp-Schalthebel bewegt sich nach jeder Schaltbewegung wieder unmittelbar in seine neutrale Ausgangsposition zurück.

Wie gleichfalls bereits eingangs erwähnt, ist eine elektromechanisch betätigbare Vorwähleinrichtung vorgesehen, die die Vorwahl der jeweils geeigneten Schaltgasse, z.B. für den ersten und zweiten Gang in Abhängigkeit von den Betriebsparaparametern des Kraftfahrzeuges, z.B. durch einen Steppermotor, vorwählt.

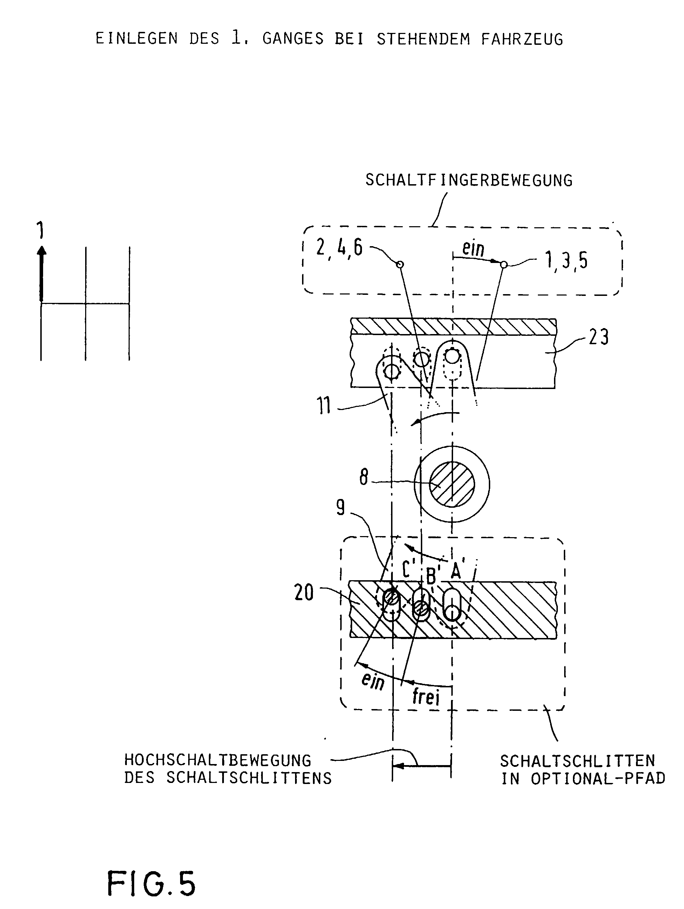

In Fig. 5 ist links ein herkömmliches Schaltschema eines Vorgelege-Wechselgetriebes mit z.B. 6 Vorwärtsgängen 1 bis 6 gezeigt und es soll das Einschalten des 1. Ganges bei stillstehendem Kraftfahrzeug erläutert werden.

Gehen wir daher davon aus, daß bei stillstehendem Fahrzeug der Fahrer des Kraftfahrzeuges durch Betätigen der Kupplung und Heranziehen des Kipp-Schalthebels zu sich das Einlegen des ersten Ganges bewirken will, so führt der Schaltschlitten die dargestellte Hochschaltbewegung in Fig. 5 und die Langloch/Bolzen-Verbindung 22/21 führt zunächst einen Leerweg frei aus und rückt dann über den Winkelbereich der mit 'ein' gekennzeichnet ist, den ersten Gang ein.

Der Kipp-Schalthebel ist unmittelbar nach der Betätigung wieder in seine Neutrallage zurückgekehrt.

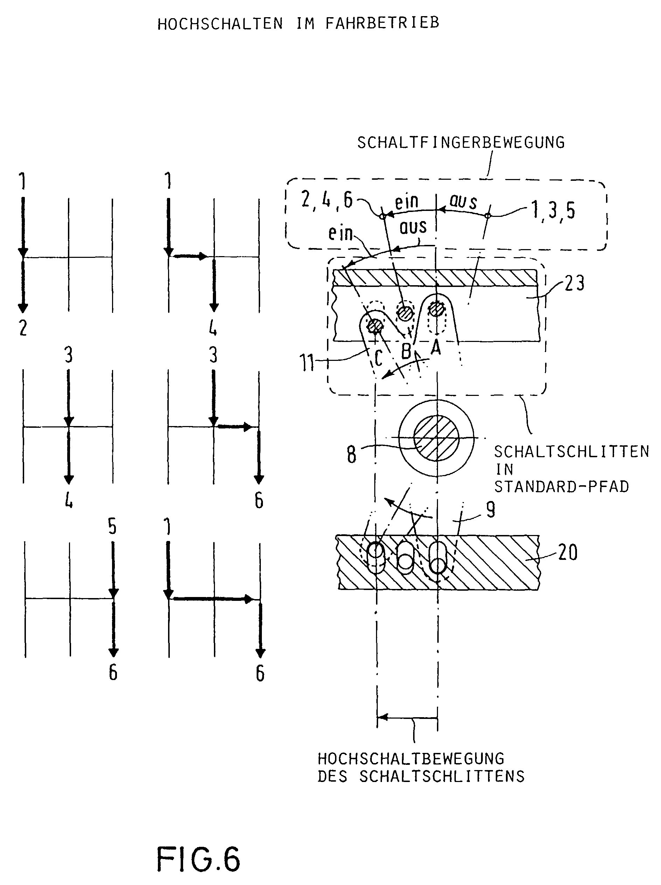

In Fig. 6 sind links wieder die in einem herkömmlichen Schaltschema möglichen Schaltungen der verschiedenen Gangstufen gezeigt und es sollen die möglichen Hochschaltungen erläutert werden.

Will der Fahrer des Kraftfahrzeuges nunmehr in den nächsten, den zweiten Gang schalten, so muß er, da er eine Hochschaltung wünscht, wieder den Kipp-Schalthebel zu sich heranziehen und im ersten Bereich des mit 'Aus' bezeichneten Winkelabschnittes wird der erste Gang ausgerückt und im zweiten Bereich des mit 'Ein' gekennzeichneten Winkelabschnittes wird der zweite Gang eingerückt.

Bei der Hochschaltbewegung wird das Auslegen des 1. Ganges als auch das Einrücken des 2. Ganges mittels Übertragungshebel 11, dessen Langloch/Bolzen-Verbindung 21/22 oberhalb der Schaltwelle 1 angeordnet ist, im zuvor beschriebenen Standard-Pfad vollzogen.

Sofern eine Schaltung bezogen auf das H-Schaltbild und den Bewegungsablauf des Schaltfingers die Bewegungsrichtung beibehält, erfolgt kein Wechsel der Übertragungshebel 9/11 während der Schaltung, d.h., die Verbindung bleibt entweder im Standard-Pfad oder Optional-Pfad bestehen.

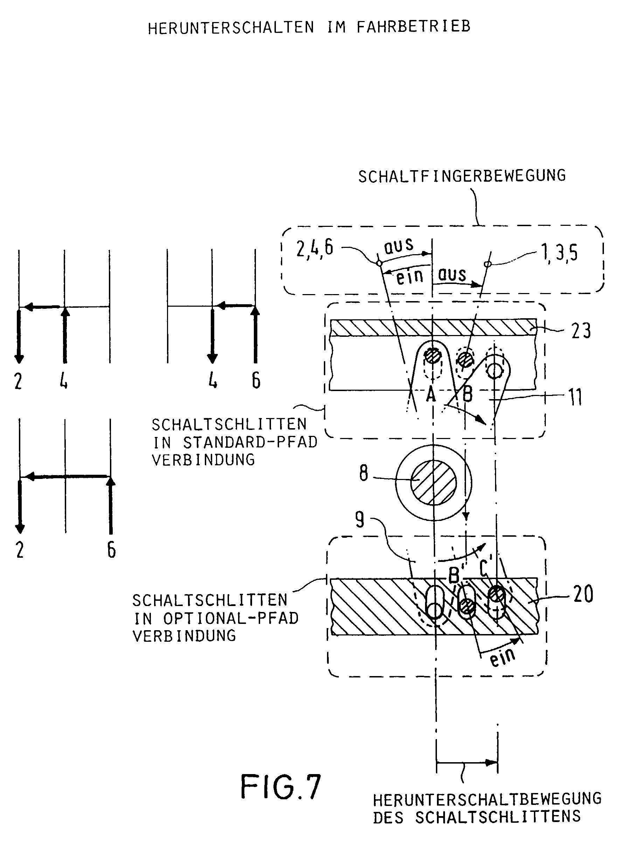

In Fig. 7 sind links die in einem herkömmlichen Schaltschema möglichen Schaltungen angedeutet, bei denen, wie z.B. nach einer starken Abbremsung des Kraftfahrzeuges, bei einer Herunterschaltung eine oder mehrere Gangstufen übersprungen werden.

Soll daher z.B. bei eingerücktem vierten Gang durch infolge kräftigen Bremsens stark herabgesetzter Fahrgeschwindigkeit die gewünschte Abwärtsschaltung in zweckmäßiger Weise nicht nur zum dritten Gang sondern unmittelbar zum zweiten Gang erfolgen, so muß nach dem Ausrücken des vierten Ganges die gewählte Schaltgasse verändert werden und die Schaltbewegung in umgekehrter Richtung erfolgen, um den zweiten Gang einzurücken.

Stellt man sich vor, daß z.B. zum Ausrücken des 4. Ganges eine Drehung der Schaltwelle 1 im Uhrzeigersinn erforderlich ist, so ist leicht zu verstehen, daß natürlich zum Einrücken des 2. Ganges eine Drehung der Schaltwelle 1 entgegen dem Uhrzeigersinn erforderlich ist.

Die durch den Kipp-Schalthebel jedoch zur Verfügung stehende Schaltbewegung geht in die gleiche Richtung wie zuvor beim Auslegen des 2. Ganges und dementsprechend muß diese am Schaltschlitten 3 in der gleichen Richtung erfolgende Schaltbewegung in eine entgegengesetzte Drehbewegung an der Schaltwelle 1 umgesetzt werden und dies erfolgt dadurch, daß diesmal die Übertragung der Schaltbewegung nicht durch den Übertragungshebel 11, sondern durch den Übertragungshebel 9 erfolgt, dessen Langloch/Bolzen-Verbindung 19/18 unterhalb der Schaltwelle 1 angeordnet ist.

Sofern sowohl bei einer Hochschaltung als auch bei einer Herunterschaltung, bezogen auf das H-Schaltbild und den Bewegungsablauf des Schaltfingers, die Bewegungsrichtung umgekehrt wird, erfolgt ein Wechsel der Übertragungshebel 9/11 während der Schaltung, d.h., die Verbindung Standard-Pfad/Optional-Pfad wird jeweils umgekehrt.

## Patentansprüche

1. Schaltvorrichtung für ein halbautomatisch schaltbares Wechselgetriebe eines Kraftfahrzeuges, mit einer vom Fahrer zu betätigenden Kupplung und einem in einer Schaltgasse bewegbaren Schalthebel, mittels dem über eine elektromechanisch betätigbare Vorwähleinrichtung verschiedene, auf Synchroneinrichtungen im Wechselgetriebe einwirkende Schaltgabeln betätigbar sind, wobei der Schalthebel als ein jeweils in seine Ausgangslage zurückkehrender Kipp-Schalthebel ausgebildet ist,
**dadurch gekennzeichnet**, daß
- die Schaltbewegungen des Schalthebels über ein Schaltgestänge oder über ein Schaltkabel auf einen in Querrichtung zu einer Schaltwelle (1) des Wechselgetriebes linear geführten Schaltschlitten (3) übertragbar sind,
- der Schaltschlitten (3) über obere und untere Führungsbolzen (4 und 5) geführt ist und an Vorsprüngen (23 und 20) über jeweils eine obere und eine untere Langloch/Bolzen-Verbindung (22/21 bzw. 19/18) mit jeweils einem von zwei Übertragungshebeln (9 und 11) zusammenwirkt und
- auf der Schaltwelle (1) eine feste Schaltnabe (10) mit einer darauf axial verschiebbaren Schaltmuffe (17) angeordnet ist, die über die elektromechanisch betätigbare Vorwähleinrichtung verschiebbar ist, um in treibende Verbindung mit jeweils einer von an den Übertragungshebeln (9 und 11) angeordneten Kupplungsverzahnungen (14 und 15) zu gelangen und eine Kipp-Schaltbewegung des Schalthebels in eine von zwei möglichen Drehbewegungen der Schaltwelle (1) umzusetzen.

2. Schaltvorrichtung nach Anspruch 1,
**dadurch gekennzeichnet**, daß
- der Schalthebel zusätzlich zu der einen, den Betriebsschaltungen vorbehaltenen Schaltgasse auch in einer parallel dazu angeordneten, die Sonder-Schaltungen enthaltenden N/R-Gasse bewegbar ist.

## Claims

1. A gearshift device for a semi-automatically shiftable change-speed gear box in a motor vehicle, having a clutch operated by the driver and a gearshift lever movable in a gearshift gate, by means of which gearshift lever various selector forks acting on synchronising means in the change-speed gear box may be actuated via an electromechanically actuatable preselection means, the gearshift lever taking the form of a rocker gearshift lever which returns each time to its starting position,
characterised in that
- the gearshift movements of the gearshift lever may be transmitted via a shift linkage or via a shift cable to a gearshift slide (3) guided linearly transversely relative to a selector shaft (1) of the change-speed gear box,
- the gearshift slide (3) is guided by means of upper and lower guide pins (4 and 5) and interacts at projections (23 and 20) via an upper and a lower elongate hole/pin connection (22/21 and 19/18 respectively) respectively with one of two transmission levers (9 and 11) and
- a fixed gearshift hub (10), with a gearshift sleeve (17) which is axially displaceable thereon, is arranged on the selector shaft (1) and may be displaced by means of the electromechanically actuatable preselection means in order to move into driving connection respectively with one of the toothed clutch portions (14 and 15) arranged on the transmission levers (9 and 11) and to convert a rocking shifting movement of the gearshift lever into one of two possible rotary movements of the selector shaft (1).

2. A gearshift device according to claim 1,
characterised in that
- in addition to the one gearshift gate reserved for working gearshifts, the gearshift lever may also be moved in an N/R gate arranged parallel thereto and containing the special gearshifts.

## Revendications

1. Dispositif de changement de vitesses pour une boîte de vitesses semi-automatique d'un véhicule automobile, avec un embrayage à actionner par le conducteur et un levier de sélection mobile dans une voie de sélection et au moyen duquel peuvent être actionnées, par l'intermédiaire d'un présélecteur à actionnement électromécanique, différentes fourchettes de sélection agissant sur des synchroniseurs dans la boîte de vitesses, le levier de sélection étant réalisé sous la forme d'un levier de sélection basculant revenant chaque fois dans sa position initiale,
**caractérisé** en ce que
- les mouvements de sélection du levier de sélection peuvent être transmis, par l'intermédiaire d'une tringlerie de sélection ou d'un câble de sélection, sur un coulisseau de sélection (3) guidé en déplacement linéaire en direction transversale à un arbre (1) de changement de vitesses de la boîte de vitesses,
- le coulisseau de sélection (3) est guidé sur des broches de guidage supérieure et inférieure (4 et 5) et, par des épaulements (23 et 20), il coopère respectivement avec l'un de deux leviers de transmission (9 et 11) par l'intermédiaire de liaisons respectives supérieure et inférieure par trou oblong et goupille (respectivement 22/21 et 19/18), et
- un moyeu de sélection fixe (10) est disposé sur l'arbre (1) de changement de vitesses, moyeu sur lequel est disposé à coulissement axial un manchon de sélection (17), qui peut être déplacé au moyen du présélecteur à actionnement électromécanique afin d'entrer respectivement en liaison d'entraînement avec l'une de deux dentures d'accouplement (14 et 15) respectivement disposées sur les leviers de transmission (9 et 11), et de transformer le mouvement basculant de sélection du levier de sélection en l'un des deux mouvements possibles de rotation de l'arbre (1) de changement de vitesses.

2. Dispositif de changement de vitesses selon la revendication 1, **caractérisé** en ce que le levier de sélection est mobile, outre dans la voie de sélection réservée aux sélections de service, dans une voie N/R disposée parallèlement à la précédente et contenant les sélections spéciales.
